# EUROPEAN PATENT APPLICATION

(11) **EP 4 520 532 A1**
(43) Date of publication of application: **12.03.2025**
(21) Application number: 23195437.1
(22) Date of filing: 05.09.2023
(51) Int. Cl.: B41F 33/00, G01N 21/88

(54) **SYSTEM AND METHOD FOR ILLUMINATION AND VISUAL INSPECTION OF PRINTED MATTER CONTAINING VARNISH**

(71) Applicant: Advanced Vision Technology (AVT) Ltd., 4527703 Hod Hasharon (IL)
(72) Inventor: Shpakov, Efi, CH-8105 Regensdorf (CH); Kanelovitch, Leon, CH-8105 Regensdorf (CH); Mazliach, Tsachi, CH-8105 Regensdorf (CH); Gazala, Chanan, CH-8105 Regensdorf (CH); Kazir, Yigal, CH-8105 Regensdorf (CH)
(74) Representative: Jonas, Hans-Hermann

(57) **Abstract**

An illumination system for inspecting varnish-containing areas of a printed substrate. An illumination dome is configured to illuminate the printed substrate with a predetermined amount of light per unit area, except in an illumination-starved region. Light reflected from the printed substrate provides a predetermined detectable degree of difference in light reflected from a varnish-containing region as compared to a non-varnish-containing region. An inspection system includes the dome and an image capture device connected to a computer memory and processor for processing captured images of the printed substrate. Programmed instructions cause the processor to map a captured inspection image to a captured base image, enhance the base image and the mapped image to enhance brightness and contrast information relating to the presence or absence of varnish, detect one or more predetermined regions of varnish in the mapped image, compare actual features to expected features, and identify deviations.

## Description

### BACKGROUND OF THE INVENTION

Varnish is a clear, transparent coating that may be applied to a printed piece during or after printing. Varnish is often added to packaging to, for example, protect the printed material against fingerprints, smudges and scuffs, and to enhance the depth of the packaging's colors and overall appearance for a distinctive style. There are many varnishing techniques practiced by the printing industry, including but not limited to:
- Flood Varnishing - matte, satin-matte, satin, gloss;
- Selective Varnishing:
   - Gloss Selective Varnishing;
   - Matte Selective Varnishing;
   - Silk/ Satin Selective Varnishing;
- Machine Sealing;
- UV Varnishing (aka varnish with optical brighteners) - Flood or Selective;
- Aqueous Varnish - typically applied over the entire surface;
- Textured Selective UV Varnish - Sandpaper, Leather, Crocodile Skin and Raised; and
- Embossing.

Inspection of narrow web printing, mainly product labels, is well known in the art. In a typical implementation, all printing levels (all separations, including varnish) are inspected in a single scan and compared against a base reference. The use of metallic films and 3D embossed features are a potential source of false calls during inspection. That effect is mitigated by dome-like, extreme wide angle uniform illumination, akin to "perfect cloudy day" in portrait photography. An exemplary such illumination device is described in U.S. Patent No. U.S. 7,784,975, incorporated herein by reference. Perfect dome illumination may have the disadvantage of also suppressing the contrast of all types of varnish finishes.

Thus, there is a need in the art for systems and methods that enable detection and viewing of varnish while maintaining regular print inspection in a dome-like environment.

### SUMMARY OF THE INVENTION

One aspect of the invention relates to an illumination system for inspection of varnish-containing areas of a printed substrate created by a printing operation. The illumination system comprises an illumination dome defining an illuminated tubular surface disposed above the printed substrate, the illuminated tubular surface configured to illuminate the printed substrate with a predetermined amount of light per unit area emanating from the interior surface of the tubular surface. The illumination dome also has an observation region for receiving light reflected from the printed substrate; and an illumination-starved region of the illumination dome, other than the observation region, configured to direct a lesser amount of light per unit area than the predetermined amount of light toward the printed substrate. The illumination-starved region is further configured to provide a predetermined detectable degree of difference in light reflected from a varnish-containing region as compared to a non-varnish-containing region of the printed substrate sufficient for the processor to detect presence and absence of varnish in the captured image .

In embodiments, the illumination dome has a reflective interior surface and includes a light source configured to emit light into the illumination dome, wherein reflection of the emitted light from the inner surface of the dome comprises the predetermined light, and the illumination-starved region of the illumination dome comprises a less reflective area configured to reflect the lesser amount of light per unit area. The illumination-starved region may be embodied by an illumination controller variable between at least a first condition (i.e. "non-white") configured to direct the lesser amount of light per unit area and a second condition (i.e. "white") configured to direct the predetermined amount of light per unit area. The illumination-controller may be moveable between the at least first condition and the second condition. In one embodiment, the illumination controller may comprise a set of fixed interchangeable sheets, in which disposition of a first sheet in a relevant location of the dome embodies the first condition, and disposition of a second sheet in the relevant location of the dome embodies the second condition. In another embodiment, the illumination controller may comprise a shutter moveable between a first position disposed in a pocket in which the shutter does not receive light and a second position in which the shutter does receive light reflected from the printed substrate. In still another embodiment, the illumination controller may comprise a polygonal cylindrical baffle rotatable between at least a first orientation embodying the first condition and a second orientation embodying the second condition.

In embodiments, the illumination-controller is variable between the first condition configured to direct a first lesser amount of light per unit area, the second condition configured to direct the predetermined amount of light, and a third condition configured to direct a second lesser amount of light per unit area intermediate the first and second amounts of light per unit area. In embodiments in which the illumination controller comprises the polygonal cylindrical baffle, the polygonal cylindrical baffle may have at least a first facet configured to implement the second (i.e. "white") condition with the first facet facing the printed substrate, at least second and third adjacent specularly reflective facets having an edge therebetween configured to implement the first (i.e. "non-white," specifically "black") condition with the edge facing the printed substrate and the adjacent specularly reflective facets directing reflected light reflected from the printed substrate (and other parts of the dome) to respective light traps, and at least a third facet configured to implement the third (i.e. intermediate "gray") condition with the third facet facing the printed substrate.

Another aspect of the invention relates to an inspection system for inspection of varnish-containing areas of a printed substrate created by a printing operation. The inspection system comprises the illumination system as described herein above, an image capture device connected to a computer memory and a processor for capturing and processing a captured image of the printed substrate; and non-transitory, computer-readable instructions embodied in the computer memory and programmed to cause the processor to perform certain steps. The steps include capturing a base image under an initial set of acceptable operating conditions of the printing operation; capturing an inspection image during the printing operation; and mapping the captured inspection image to the base image. The steps further include enhancing the base image and the captured inspection image mapped to the base image to enhance brightness and contrast information relating to the presence or absence of varnish, and detecting one or more predetermined regions of the varnish in the captured inspection image mapped to the base image. The steps further include comparing an actual feature of the identified one or more predetermined regions to an expected feature of the identified one or more predetermined regions and identifying a deviation between the actual and expected features. In embodiments, the feature comprises an edge-on-edge or an edge-on-flat feature. The deviation may include a shift in location of the feature. A deviation greater than a threshold amount may be identified as a defect.

In an embodiment, the instructions further include instructions for providing one or more tracking dots to be applied to a varnish edge region in the inspection image, the base image, the inspection image superimposed on the base image, or a combination thereof, and wherein the comparing step comprises comparing an actual location of the one or more tracking dots in the inspection image to an expected location and determining a difference between the expected and actual locations. In embodiments in which the illumination-starved region is variable between the implemented condition and the non-implemented condition, the system may be further configured to detect ink-related deviations in the captured image when the illustration-starved area is in the implemented condition.

Yet another aspect of the invention relates to a computer-implemented method for inspection of varnish-containing areas of a printed substrate created by a printing operation. The method comprises providing an illumination system comprising an illumination dome comprising an illuminated tubular surface disposed above the printed substrate, the illuminated tubular surface configured to illuminate the printed substrate with a predetermined amount of light per unit area emanating from the interior surface of the tubular surface, the illumination dome having an observation region for receiving light reflected from the printed substrate. The method includes capturing a captured image of the printed substrate with an image capture device connected to a computer memory and a processor, and providing a detectable difference in light reflected from a varnish-containing region as compared to a non-varnish-containing region of the printed substrate sufficient for the processor to detect presence and absence of varnish in the captured image. The processor performs the steps of: capturing a base image under an initial set of acceptable operating conditions of the printing operation; capturing an inspection image during the printing operation; mapping the captured inspection image to the base image; enhancing the base image and the captured inspection image mapped to the base image to enhance brightness and contrast information relating to the presence or absence of varnish; detecting one or more predetermined regions of the varnish in the captured inspection image mapped to the base image; and comparing an actual feature of the identified one or more predetermined regions to an expected feature of the identified one or more predetermined regions and identifying a deviation between the actual and expected features.

Still another aspect of the invention relates to computer readable media embodying non-transitory, computer-readable instructions programmed to cause a processor to perform the steps of causing an image capture device to capture a base image of a varnish-containing areas of a printed substrate created by a printing operation under an initial set of acceptable operating conditions of the printing operation; capturing an inspection image during the printing operation; mapping the captured inspection image to the base image; enhancing the base image and the captured inspection image mapped to the base image to enhance brightness and contrast information relating to the presence or absence of varnish; detecting one or more predetermined regions of the varnish in the captured inspection image mapped to the base image; and comparing an actual feature of the identified one or more predetermined regions to an expected feature of the identified one or more predetermined regions and identifying a deviation between the actual and expected features. In embodiments in which the processor is configured to be connected to an inspection system comprising the illumination system with an illumination controller as described herein, the instructions may further comprise instructions for causing the illumination controller to be manipulated between the at least first and second conditions.

### BRIEF DESCRIPTION OF THE DRAWINGS

FIG. 1A is a schematic cross-sectional illustration of an exemplary illumination dome of an embodiment of the invention featuring a first baffle embodiment.
FIG. 1B is a schematic cross-sectional illustration of an exemplary illumination dome of an embodiment of the invention featuring a second baffle embodiment.
FIG. 1C is a schematic cross-sectional illustration of an exemplary illumination dome of an embodiment of the invention featuring a third baffle embodiment in a first position.
FIG. 1D is a schematic cross-sectional illustration of an exemplary illumination dome of an embodiment of the invention featuring the third shutter embodiment in a second position.
FIG. 2 is a schematic cross-sectional illustration of an exemplary illumination dome of an embodiment of the invention including a moveable shutter.
FIG. 3A and 3B schematically illustrates the physics of the reflectance of diffusing substrates coated with a transparent layer.
FIG. 4A schematically illustrates the physics of the reflectance of a clear glossy varnish layer disposed on a diffusing carrier substrate under full dome illumination.
FIG. 4B schematically illustrates the physics of the reflectance of a clear glossy varnish layer disposed on a diffusing carrier substrate under dome illumination with the darkened region in an implemented configuration.
FIG. 4C schematically illustrates the physics of the reflectance of a clear matte varnish layer applied over a glossy carrier substrate under full dome illumination.
FIG. 4D schematically illustrates the physics of the reflectance of a clear matte varnish layer applied over a glossy carrier substrate under dome illumination with the darkened region in an implemented configuration.
FIG. 5A schematically illustrates the various regions of a varnish-containing label relevant for inspection.
FIG. 5B schematically illustrates a flowchart of the applicability of the various regions of a varnish-containing label relevant for inspection to the detection of defects.
FIG. 6A is a rendering of a print layer of an exemplary job to be printed by a label printing operation.
FIG. 6B is a rendering of a selective varnish layer of the job corresponding to FIG. 6A.
FIG. 6C is a rendering of a flood matte varnish layer of the job corresponding to FIG. 6A.
FIG. 6D is a rendering of a foil layer of the job corresponding to FIG. 6A.
FIG. 7 is an illustration of a portion of a captured image of a varnish region of an exemplary label, showing a registration fine-tuning operation.
FIGS. 8A and 8B depict captured images at different levels of magnification relating to areas of selective varnish within the printed label of the job corresponding to Fig. 6A.
FIGS. 9A and 9B depict captured images at different levels of magnification relating to areas of flood varnish within the printed label of the job corresponding to Fig. 6A.
FIG. 10A depicts a first exemplary enhanced image area of a base (golden) image of a printed label of the job corresponding to Fig. 6A.
FIG. 10B depicts an exemplary enhanced image of a captured inspection image mapped onto the base image of FIG. 10A, illustrating a misregistration defect.
FIG. 10C depicts an exemplary unenhanced image corresponding to the image of FIG. 10B.
FIG. 11A depicts a second exemplary enhanced image area of a base (golden) image of a printed label of the job corresponding to Fig. 6A.
FIG. 11B depicts an exemplary enhanced image of a captured inspection image mapped onto the base image of FIG. 11A, illustrating a misregistration defect.
FIG. 11C depicts an exemplary unenhanced image corresponding to the image of FIG. 11B.
FIG. 12A depicts a third exemplary enhanced image area of a base (golden) image of a printed label of the job corresponding to Fig. 6A.
FIG. 12B depicts an exemplary enhanced image of a captured inspection image mapped onto the base image of FIG. 12A, illustrating a matte flood varnish partial starvation defect.
FIG. 12C depicts an exemplary unenhanced image corresponding to the image of FIG. 12B.
FIG. 13A depicts an exemplary portion of a base image depicting an expected location of exemplary tracking dots.
FIG. 13B depicts an exemplary portion of a captured inspection image showing a difference in actual versus expected location of tracking dots.
FIG. 14 is a flowchart depicting an exemplary method for performing an aspect of the invention.

### DETAILED DESCRIPTION OF THE INVENTION

Aspects of the invention as described herein include the introduction of an illumination change that enables varnish detection and viewing in a dome illumination environment, which still enables regular print detection with minimal degradation of inspection quality. The induced change in illumination is accompanied by use of a dedicated varnish algorithm tuned to detect varnish process defects and to the process steps used in label production. The algorithm uses information from the file that embodies the label design (e.g. one or more PDFs), which includes a plurality of separations each identifying a relevant process step - varnish, foil, die cut or others.

Aspects of the invention include use of a varnish-idealized, contrast-enhancement model that may operate under a plurality of assumptions. For example, the model assumes a perfectly transparent film having a refractive index of 1.5, which is generally in line with realistic transparent films used in the labeling field, such as PVC (~1.535) and PET (~1.575). Notably, liquid varnish materials comprise different plastic chemicals (e.g. acrylic: ~1.49), but most optically clear plastics generally have a refractive index in the range 1.48 - 1.62. The contrast effects described herein later become more prominent at a higher RI. The model also assumes that the top surface is either perfectly glossy (mirrorlike) or perfectly matte (light-scattering). A reflectivity of 4% is assumed at the topcoat surface (corresponding to n ~ 1.5 at normal incidence). The carrier roll is modeled as either perfectly Lambertian (diffusely reflecting) or perfectly glossy with a varying amount of overall reflectivity. The illumination is modeled as a perfect 180° dome.

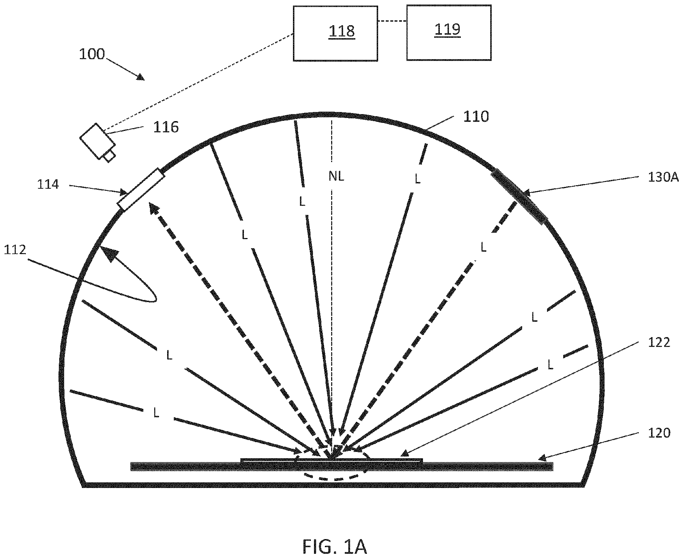

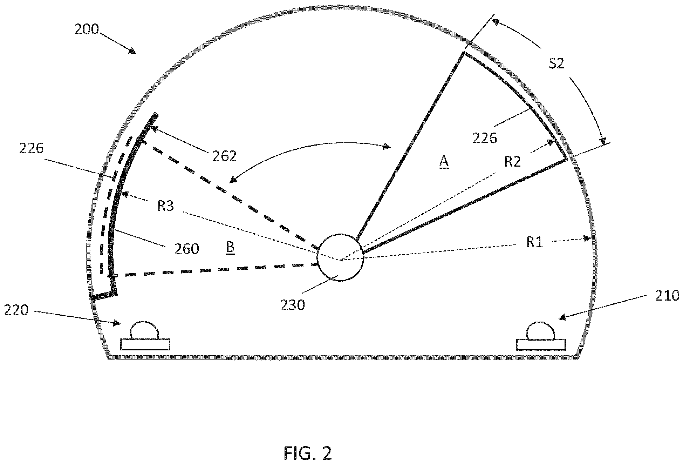

An exemplary cylindrical illumination dome arrangement 100 is depicted in FIG. 1A in cross-section. Cylindrical dome 110 embodies an interior wall having a quasi-semicircular cross-section and an internal surface 112 that is diffuse and reflective (e.g. coated with a diffuse, reflective white coating, such as white paint). Although characterized as a "quasi-cylindrical" dome, it should be understood that none of the embodiments as described herein require a strictly cylindrical cross section, and the cross section may be perfectly semi-cylindrical, or may depart therefrom, as is known in the art. Light that is projected into the interior of the dome (e.g. from one or more light sources, such as rows of LEDs 210, 220 extending through the length of the dome as depicted schematically in FIG. 2 (omitted in other drawings for clarity), and thus reflects off of the dome wall surface (i.e. as depicted by arrows L) onto the printed item to be inspected, which is typically disposed on a carrier 120 and (for purposes of the implementation discussed herein) has a clear film in the nature of a varnish-containing area 122. An opening 114 in the dome permits light reflected off of the printed item to be collected by an imaging device 116 (e.g. a camera). In a normal inspection environment, the dome walls are continuous (at least in a nearly 180 degree area above the item to be inspected). The "nearly 180 degree area" refers to the area above the item to be inspected (as 180 degrees is generally the physical limit for front illumination -- exceeding 180 degrees typically requires back illumination), but the quasi-semicircle that forms the walls may form an arc that is greater than 180 degrees, as depicted in FIG. 1A. In the varnish mode of illumination, in embodiments of the invention as described herein, a blackened baffle 130A masks an area of the specular component of the dome. "Specular" as used herein refers to location in a position symmetrically aligned with the camera port 114 relative to the normal line NL to the inspected substrate . Accordingly, light originating from the baffle section of the dome is reflected by any reflective portion of the substrate in the general direction of camera port 114.

Although depicted with two rows of LED light sources on both sides in Fig. 2, it should be understood that the illumination dome is not limited as to the number and location of such sources, and embodiments of the illumination dome may include any arrangement known in the art or suitable for practicing the invention. Any illumination dome capable of providing a darkened or otherwise illumination-starved region of sufficient size to create the visual effects as described herein for detection of varnish may be acceptable, as discussed further herein below.

While referred to herein above as "darkened" or "blackened" "baffle" in connection with exemplary embodiment, it should be understood that any manner of providing an illumination-starved region as compared to predetermined amount of illumination per unit area that emanates from the surrounding surface of the illumination dome may provide a suitable level of contrast, and that rather than a "baffle," the illumination starvation may be provided by any method known in the art, not limited to the various methods as described herein. The means for providing the illumination starvation may be referred to generally as an illumination controller, in the sense that it controls the amount of illumination coming from the region of interest, which may vary from reflective to the same extent as the rest of the dome, to illumination starved to a generally blackened state, or to some intermediate state between normally reflective and blackened. Any type of illumination system suitable for providing the different levels of illumination as specified herein for capture by the camera as reflected by the varnish-containing printed matter, may enable processing by the methods and systems as described herein.

As is known in the art, generally, the desirable amount of light starvation may depend on the nature of the application web. While a "perfect white," blending in with the rest of the dome, has been found to be optimal for inspecting metal foils, holograms and other embossed features, inspection of print color rendition may be better served by an approximately 20% (+/- 5%) reflecting gray for a more balanced approach. For inspecting varnish, clear labels and the like, as described herein, a black baffle of less than about 3% (+/-2%) reflectivity is desirable for providing adequate contrast, but generally speaking, the lower the reflectivity, the better. Accordingly, the baffle area in some embodiments may be variable between about 3% reflecting for the "black" implementation, approximately 20% reflecting for a "gray" implementation, and at the same degree of reflectivity of the rest of the dome in a "white" implementation (which is typical practice, is in the range of about 85% to about 95% in most practical applications, with 97% to about 98% being considered "state of the art."

In embodiments such as that depicted in FIG. 1A, the illumination controller 130A may be embodied as a fixed but otherwise interchangeable sheet. Its inward facing side has optical reflectivity in accordance with the type of web to be inspected, namely a reflectivity characterized as "white" to blend with dome, "black" for optimum inspection of varnish or intermediate gray, as described above.

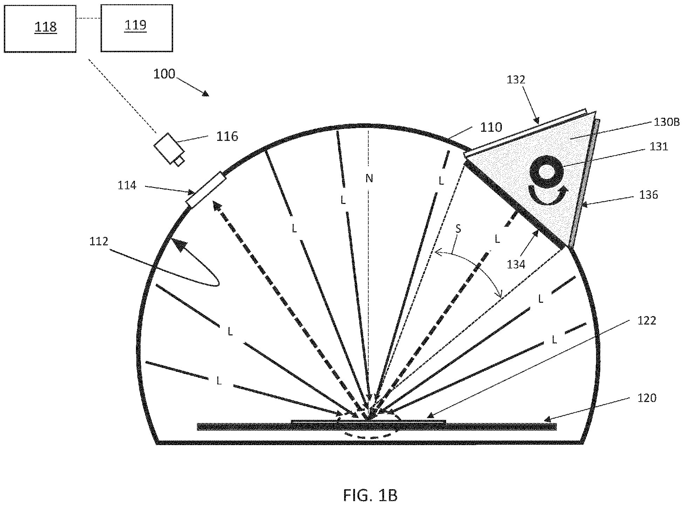

In an alternate embodiment, depicted in FIG. 1B, the baffle 130B may comprise a tri-faceted cylinder having a polygonal, preferably triangular, cross-section, rotatably mounted on a shaft 131. As shown, each facet of the polygonal cylinder has a different reflectivity (e.g. white 132, black, 134 or gray 136) - according to inspected web attributes. As depicted in FIG. 1B, black facet 134 is deployed. The baffle configuration is depicted in FIG. 1B only schematically, and it should be understood that the shaft on which the baffle is mounted may be fixed, so that the baffle rotates in place, or the shaft may be movable radially relative to the axial center of the dome cross section, so that it may be distally displaced to a first location, rotated in the distal location, and then moved distally into a location snugly disposed in position adjacent or in contact with dome. Although shown with planar faces in FIG. 1B, it should be understood that each face may have an arcuate cross section that matches the geometry of the dome. The baffle may be manually rotatable between or among the different orientations, or may be controlled by an actuator (such as a motor) attached to a controller for causing the baffle to rotate to a desired position. The variable baffle controller may be connected to a processor configured to implement the aspects of the invention as discussed further herein.

It should be understood that although depicted with a triangular cross section to provide 3 different levels of reflectivity, polygons with more than 3 faces may be provided, including embodiments with more than one different gray level. In still other embodiments, a cylinder having a flattened rectangular cross section may have active opposing facets of, e.g. white and black, or black and gray, that provide only 2 levels of differentiation, wherein a 180 degree rotation changes from one reflectively to the other.

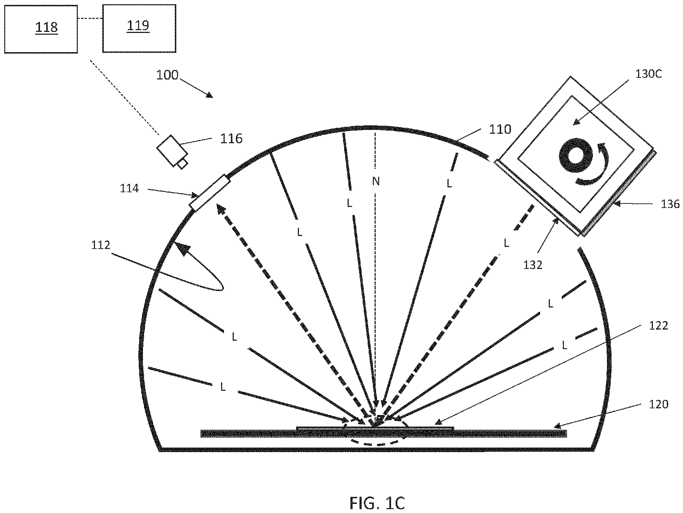

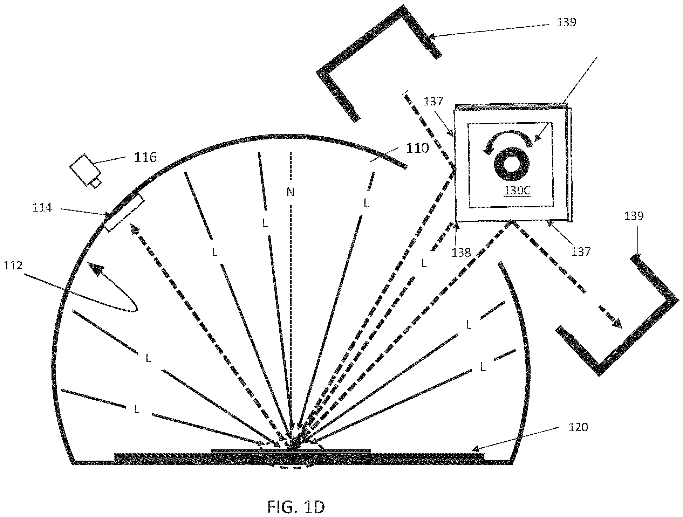

In the embodiment depicted in FIGS. 1C and 1D, the polygonal cylinder 130C may have a square cross-section. Two adjacent facets may be formed as substantially flat specular surfaces acting together to achieve the "black" level of reflection, as depicted in Fig. 1D. Other facets may have different reflectivity e.g. white 132 or gray 136 - according to inspected web attributes, as depicted in FIG. 1C with the white facet 132 deployed to blend in with rest of dome.

As depicted in FIG. 1D, the square polygonal cylinder 130C may have two adjacent specular surfaces 137 deployed with their sharp intersecting edge 138 facing the light reflected by the web from the vicinity camera of the footprint. Light traps 139 may be formed as blackened elongated cavities as is known in the art facing each mirrored facet 137 to prevent light from reflecting back towards the web. The mirrored facet embodiment may have certain advantages in terms of being less susceptible to collected dust and may offer superior cleanability as compared to commercially available matte black coatings. Image capture device 116 is connected (i.e. wired or wirelessly) to a computer processor 118 that is connected to computer memory 119. Computer processor 118 is configured to read non-transitory computer readable instructions stored in computer memory 119 for carrying out the various method steps as described herein. Computer memory 119 also stores the instructions corresponding to the various captured images and PDF files as described herein. As is known in the art, the computer process may include a single processor or multiple processors linked together; likewise, computer memory may comprise a plurality of discrete memories linked together, or a single memory with various addressable locations for storage of the instructions, files, images, and the like, as described herein. Processor 118 may be a special processor dedicated to the inspection processes as described herein, or may be a processor capable of controlling other aspects of print inspection or operation. In particular, embodiments of the processor and inspection system as described herein are capable not only of providing inspection of printed matter containing varnish, but also printed matter that does not contain varnish, the latter of which is well known in the art. It is of particular utility to provide a system that can perform both the varnish detection techniques as described herein, and also normal inspection of printed matter (i.e. for detecting printing related defects relating to, e.g., misregistration of ink separations, dot gain and plate damage in flexographic systems, defective nozzles in inkjet systems, and the like).

FIG. 2 depicts another exemplary mechanism for providing an illumination dome system 200 capable of providing illumination both with and without the blackened baffle or shutter blocking the relevant area along a quasi-semicircular cylindrical dome. In the system depicted in Fig. 2, the baffle 226 may comprise a shutter defined by a segment S2 of a dome defined by a cross-sectional semi-circle having a smaller radius R2 than the radius R1 of the semi-circle that defines the illumination dome. Although depicted in FIG. 2 in cross-section as a segment defined by radius R2, the shutter geometry is not limited to a semi-circular segment in cross-section, and may have another geometry, including but not limited to a planar geometry. Shutter 226 has opposite end connectors that connect to a central driven hub 230 that rotates on a shaft portion disposed on the common centerline of the semicircles defined by R1 and R2. A motor (or other type of actuator) is connected to and drives hub between a shutter-engaged (blackened) position A (solid lines) and a shutter non-engaged (illuminated) position B (dashed lines). A screen 260, having an inner wall 262 with the same reflective properties as the inner wall of the dome, is defined by a segment of a semicircle having a radius R3 smaller than that of R2, which segment is of sufficient length (e.g. greater than the length of S2) to hide the shutter when it is in the non-implemented position. In this implementation, although depicted only with a black baffle that is moveable from implemented and non-implemented configurations, the baffle may be white, such that when removed from the pocket the reflectivity is white and when disposed in the pocket the reflectivity is black. Furthermore, although shown with only a single moveable baffle, it should be understood that multiple baffles may be nested, such as to provide black or one or more levels of gray. As non-limiting examples, in one embodiment, the nested baffles may include one black reflective baffle and one gray reflective baffle, or multiple gray tinted, translucent baffles, each when implemented alone forming a different degree of gray and when implemented in a stacked configuration together forming black).

Other methods and mechanisms for providing an implemented and non-implemented illumination starvation, including moveable or changeable baffles (or a permanently implemented baffle) may be provided, and the invention is not limited to any particular mechanism. The geometry of the system as depicted is for schematic illustration only, and actual dimensions and relative sizes of the dome, shutter, and screen may be substantially different than as depicted.

### General Physics of Operative Optical Principles

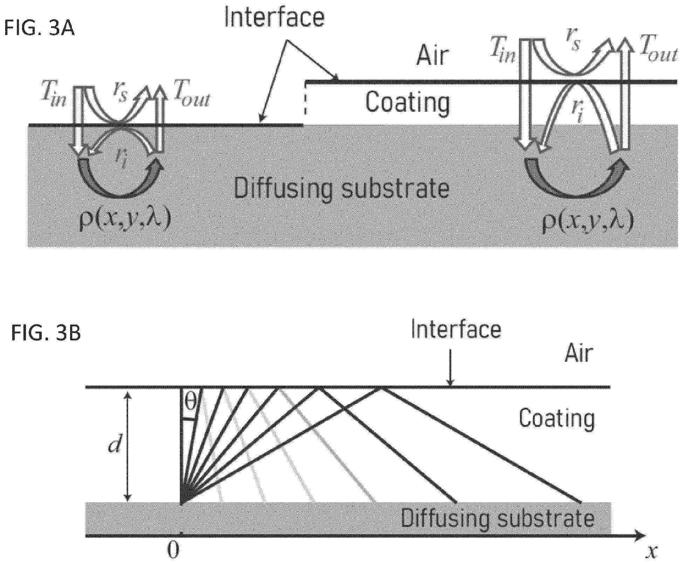

FIGS. 3A and 3B schematically illustrate the physics of the reflectance of diffusing substrates coated with a transparent layer, namely the Williams-Clapper model -- a deterministic optical model that describes the reflectance of a Lambertian surface covered by a layer. Source: Dailliez, F.; Hébert, M.; Blayo, A.; Chagas, L.; Fournel, T. "Impact of a Transparent Coating on the Reflectance of a Line Halftone Pattern." Coatings 2021, 11, 1465. https://doi.org/10.3390/coatings11121465

The four parameters *rₛ, rᵢ*, *Tᵢₙ,* and *Tₒᵤₜ* represent the flux transfers at the interface with air. The reflectance *rₛ* represents the portion of incident light externally reflected by the interface and captured by the observer (or detector). The transmittance *Tᵢₙ* represents the portion of light entering into the substrate. The reflectance *rᵢ* represents the portion of (diffuse) light internally reflected by the interface. The transmittance *Tₒᵤₜ* represents the portion of light emerging from the substrate in the direction of the observer (or detector). The parameter *ρ* represents the intrinsic reflectance of the substrate. This parameter controls the way the energy *Tᵢₙ* is converted into reflected energy *Tₒᵤₜ,* and also the recycling of a portion of the *rᵢ* reflection and combining it with *Tₒᵤₜ.*

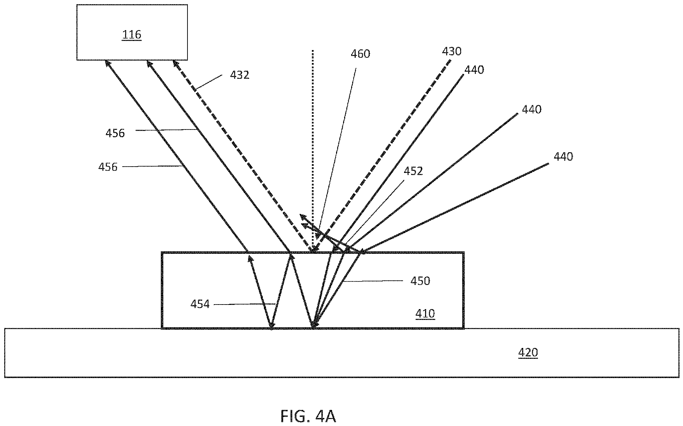

FIG. 4A illustrates a physics model 400A applying the foregoing to the illumination of a clear glossy layer 410 disposed on a diffusing carrier substrate 420, with full dome illumination (i.e. a system such as shown in FIG. 2 in which the shutter is in the non-engaged configuration and the full surface of the dome is reflective). Light rays (dashed and solid lines with arrows) coming from the illumination dome (not shown) illuminate layer 410 disposed on substrate 420. Area 460 represents the footprint of line camera. The carrier substrate has a reflectivity of R₁% relative to a pure white substrate subject to similar illumination profile taken to be 100%. Dashed ray 430 represents light coming from (non-blackened) shutter portion of the illumination dome whereas solid rays 440 represent light coming from rest of dome. Internal reflection rays 454 inside the coating 410 are recycled. About 96% of the light, represented by ray 450, is transmitted through coating 410 and is incident on the carrier substrate 420, whereas about 4% of the light, represented by rays 432 and 452, reflects at the coating-air interface. The term "about" as used herein means +/-2%, preferably +/- 1%, more preferably +/-0.5%. Light ray 452 (representing a direct reflection of a ray 440 originating in the non-specular portion of the dome surface 112) misses the camera 116, whereas light ray 432 (representing a direct reflection of one of rays 430 originating in the specular section of dome surface 112) reaches the camera 116. This results in R₁% of the overall light reaching the camera 116, represented by rays 456, comprising the 96% recycled via the diffuse substrate 420 and the 4% directly reflected from the glossy surface, represented by ray 432. R₁% is also by definition the light level received at the camera from non-coated regions of the substrate. Consequently, the model depicted in Fig. 4A provides no optical contrast between coated and uncoated portions.

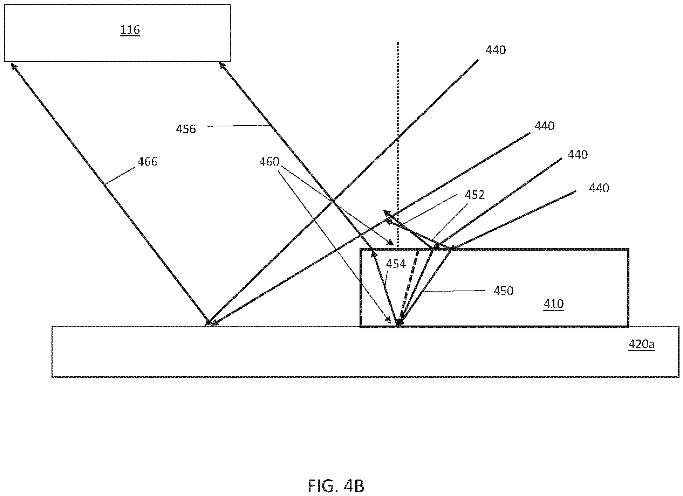

FIG. 4B illustrates a physics model 400B applied to the same illumination of clear glossy layer 410 disposed on diffusing carrier substrate 420a with the same dome illumination system, but with the shutter in the engaged (blackened) configuration. As with FIG. 4A, area 460 represents the footprint of line camera 116, the carrier substrate has a reflectivity of R₁%, solid rays 440 represent light coming from the illuminated portion of the dome, and internal reflection rays 454 inside the coating 410 recycled. About 96% of the light that hits coating 410, represented by ray 450, refracts through coating 410 and is incident on the carrier substrate 420a, whereas about 4% of the light, represented by rays 452, reflect at the coating-air interface and impinge on other parts of the dome away from camera port 114, thus missing camera 116. Thus, the about 4% reflected from the coating-air interface is lost. Substantially no light comes from the shuttered (blackened) area, so there is also substantially no light that is reflected to the camera 116 corresponding to the blackened portion of the dome. In practice, the shutter reflectance is typically substantially less than 4% in the direction of the camera footprint 460, but not necessarily zero. Alternate shutter embodiments may be provided as described in more detail herein. Accordingly, only 0.96R₁% of the overall light reaches the camera 116 that hits the coating layer, represented by ray 456. Illumination light that does not pass through or reflect from layer 410, reflects from the carrier 420 at R₁%, as represented by ray 466.

It should be understood that under the idealized varnish model as described herein, 4% is a good approximation for most clear plastics used as varnish compositions. That reflectivity varies somewhat with incidence angle; however, the variation is negligible over the < ±40° range encompassing most of the incident and reflected light energy in practical embodiments of the invention. Since perfect glossiness (no scattering) and perfect flatness are assumed, for optimum contrast the blackened baffle is typically positioned symmetrically opposite the camera port slit 114. Further the baffle typically subtends an angle at the camera footprint 460 that is equal to the camera lens acceptance angle at that location, which is typically about 1°. Under this idealized model, further increasing the blackened section angle typically only diminishes overall light level without impacting the varnish contrast.

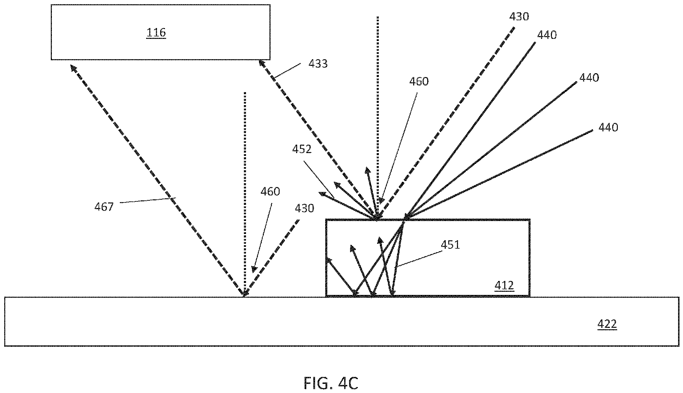

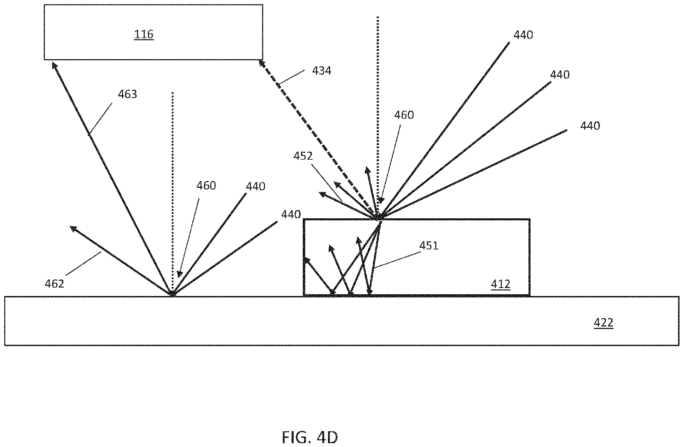

The foregoing represents a maximum contrast theoretically achievable under this model. Several factors combine to reduce the actual contrast. Any scattering e.g. diffusivity or waviness (non-flatness) of the top coating interface typically results in some rays 452 reaching the sensor 116, resulting in nonzero contribution of that surface. Likewise, any residual reflection or scattering by the blackened baffle has a similar effect. To partially offset the effect of varnish scattering or waviness it may be desirable to further substantially widen the angular baffle extent to either side of the precise specular orientation, as depicted in Figs. 1 and 2. This is because light reflected or scattered due to those effects tends to be mostly radiated in the vicinity of the main specular component. It is preferable not to overdue baffle widening, however, as in addition to contributing to an overall reduction of the inspection light level, an overly extended baffle also tends to negate the enhancement effect of diffuse varnish discussed further below in relation to Figs. 4C and 4D. Thus, an optimal baffle size may vary depending on overall system attributes, and may be determined by experimentation for a specific system geometry. In embodiments, however, a baffle subtending between 20° and 40° angular extent at the camera footprint line 460 has been generally found to allow adequate inspection quality of both varnish and printed color levels, as depicted by angle S in FIG. 1B. The camera lens optical axis as well as the baffle center (the "specular direction") preferably are both tilted at acute angles (e.g. between 20° and 30°) relative to opposite sides of the normal line (N) to the web. Nonetheless, the processing algorithms as described herein are operable with contrasts that are well below the ideal 4%.

FIGS. 4A and 4B illustrate that the idealized model predicts a contrast difference of ~4% gray level (GL) (4% darker) between rays 456 (at 0.96%R₁) reaching the camera 116 after passing through the clear glossy layer as compared to rays 466 (at R₁%) that reflect off of the diffuse substrate, without passing through the clear glossy layer, when the shutter is blackened. This model was confirmed in application tests. The model shows that a glossy smooth coating blends in with the substrate with a uniformly reflecting dome. Notably, any diffusivity of the coating-air interface tends to diminish the contrast difference in a model based upon the assumption of a diffuse substrate. A perfectly diffuse coating would blend in completely under any shutter reflectivity value (akin to how 3M^{®} Magic^{™} tape disappears on paper and does not show up in a photocopy).

FIG. 4C depicts a physics model 400C in which a clear matte layer 412 is applied over a glossy substrate 422 with full dome illumination (with the shutter in the non-engaged configuration and the full surface of the dome is reflective). Like reference numerals represent the same features as in FIGS. 4A and 4B. Area 460 represents the footprint of line camera 116. The carrier substrate has a reflectivity of R₂% relative to a pure white substrate subject to similar illumination profile taken to be 100%. Dashed ray 430 represents light coming from (non-blackened) shutter portion of the illumination dome, whereas solid rays 440 represent light coming from rest of dome. About 96% of the light that passes through coating 412 and is incident on the carrier substrate 422, is reflected (R₂%) and recycled, represented by ray 451. About 4% of the light, represented by rays 433 and 452, reflects at the coating-air interface and is scattered. In the non-blackened configuration, this results in R₂% of the light from the overall dome illuminator reaching the camera 116, represented by rays 433. Light from the overall dome illuminator that hits the carrier substrate 422 without going through the coating 412 is also reflected towards camera 116 along ray 467, meaning that R₂% reaches the camera 116 from the substrate-air interface as well, as is discussed in more detail below.

The physical model of Fig. 4C becomes relatively simple when the substrate is assumed to be glossy and completely black (R₂ = 0). A non-black substrate may be modeled as a diffuse medium having an R₂ reflectivity (The ratio of Tₒᵤₜ in Fig. 3A to the total incident energy) with a glossy topcoat having about 4% specular reflectivity (denoted as rₛ in the left hand part of Fig. 3A). Applied to Fig. 4C, varnish coating 412 is in optical contact with substrate 422 topcoat, a condition known in the art as quasi (refractive) index matching. Accordingly, the amount of specular reflectivity at the 412/422 interface is negligible, as depicted in the right-hand side of Fig. 3A. Rays 451 represent the approximately 96% transmitted into the coating (Tᵢₙ in Fig. 3A). Rays 451 are mostly reflected diffusely with R₂ reflectivity and get recycled through repeated transmissions and reflections at both the coating/air interface and the substrate intrinsic reflectance (denoted as rᵢ in Fig.3A and shown in more detail in Fig. 3B). That light energy adds up to the component rₛ diffusely reflected from the top surface of film 412 and together make up Tₒᵤₜ at the corresponding location. Under the simplified model assuming perfect Lambertian scattering and full 180° dome illumination, the contribution of the rₛ component amounts to the approximately 4% overall reflectivity by the top surface. The total light level represented by ray 433 going to sensor 116 is therefore about (0.96R₂ + 4) %. This amounts to about 4% for a black (R₂ = 0) substrate, and 100% ("perfect white") for an ideal white substrate (R₂ = 100%).

A somewhat different reasoning applied to the non-coated region of the substrate depicted in Fig. 4C leads to similar result. Ray 467 going to sensor 116 also represents about (0.96R₂ + 4)% of the incident 100%, resulting in practically no contrast of the coated parts. The approximate 4% contained in ray 467 now comprises a specular reflected component. The end result of the model of Fig. 4C is no contrast between coated and uncoated regions in the acquired image of the substrate, regardless of the actual value of R₂. The simplicity of the model is derived from the assumption of uniform 180° dome illumination, under which condition the top surface component received at the sensor is very nearly the same 4% for either specular or diffuse film/air reflectivity. Narrowing of the dome angular coverage below 180° would have the effect of diminishing film coating acquired gray level while not affecting the gray level of the specular substrate reflection.

FIG. 4D depicts a physics model 400D in which a clear matte layer 412 is applied over a glossy substrate 422 with the same dome illumination system of FIG. 4C, but with the shutter in the engaged (blackened) configuration. Area 460 represents the footprint of line camera 116. The carrier substrate (underneath layer 412) has a reflectivity of R₂%. Solid rays 440 represent light coming from brightly reflecting portions of the dome (there is no corresponding ray from the shuttered (blackened) portion of the dome). About 96% of the light that passes through coating 412 and is incident on the carrier substrate 422 is reflected and recycled, represented by ray 451.About 4% of the light, represented by rays 434 and 452, reflect at the coating-air interface. Since all reflections taking place at the coated region are diffuse (i.e. agnostic to light incidence directionality under this idealized model), the percentage of reflected light is the same as Fig. 4C, namely (0.96R₂ + 4)%. It is noted for clarity that this percentage now corresponds to a lower light level in absolute terms than the one in Fig. 4C. The difference is the amount "missing" due to the partial blackening of the dome. In contrast, light from the illuminated area of the dome that hits the carrier substrate 422 without going through the coating 412 has 4% of the light reflected specularly from the glossy top coating along rays such as 462 that now all miss the camera 116, meaning that 0.96R₂% reaches the camera along ray 463 from the substrate-air interface.

FIGS. 4C and 4D illustrate that the idealized model predicts a contrast difference of ~4% gray level between coated (lighter) and the glossy substrate (darker) regions of the substrate having diffuse reflectivity R₂ achieved with a blackened shutter. Application tests confirm this effect. The model shows that a matte coating blends in with the glossy substrate with uniformly reflecting dome. However, any glossiness of the coating-air interface, as well as any diffusivity of the substrate, tends to diminish the contrast difference.

Notably, the physics as illustrated in FIGS. 3A-4D are only provided herein to show the theory behind the operation of the invention, and the invention is not limited to any particular optical features of the varnish or the carrier. Rather, the physics as illustrated show why the system as described herein works for any number of different varnish and substrate types.

There are numerous categories of varnish and application technology, including selective/spot varnish applications, such as using gravure, flexo, screening, or inkjet methods, and flood / overprint / overall varnish application techniques, such as using a coater. Inspection of printed matter containing varnish is looking for misregistration (of varnish relative to an imaged area) and partial or full varnish starvation. The inventive methods and systems as described herein include some initial stated assumptions. First, information regarding the varnish separations is available from the print job design. Second, the varnish coverage and registration is in satisfactory condition at startup (which is the responsibility of the press operator). Aspects of the invention employ an inspection imaging system in which optical adjustments employed for detecting varnish defects present only minimal interference with common inspection techniques, such as the optical adjustment created using a blackening shutter that has an implemented and a non-implemented configuration. A software image-processing enhancement algorithm (for enhancing and emphasizing small changes in image characteristics, such as colour and brightness of an area that is distinguishable from the surrounding area) is helpful for enabling visualization of the varnish. With the foregoing features, comparing a current inspection scan with a golden base image and using an image-processing enhancement, at least some typical deviations due to varnish malfunction are discernible, allowing common machine-vision automation algorithms to be employed.

Typical print jobs are defined in a PDF file, with a plurality of layers (separations), including, for example, a varnish layer mask layer, a foil mask layer, and other separations. The print (ink) layers may be combined into a single layer for purposes of detecting varnish defects. It is also important to have as an input information as to whether a flood varnish is being applied.

Each type of inspection system has a setup phase to define various parameters required for inspection. Typical parameters for identifying each job may include numeric values such as label size or string values such as job name. Often, inspection setup refers to image data to define image areas or specific patterns of interest, in which case the typical implementation is based on real live image data captured by a camera. For varnish detection in accordance with at least some embodiments of the invention, however, the setup phase may be based entirely on PDF setup with process step awareness, using PDF image data with no use of image data from camera. Setup includes tagging of the separation with appropriate process steps (e.g. varnish, die cut, foil, etc.). The process step in conjunction with appropriate separation PDF image data is considered by the varnish detection algorithm. Software flow includes a step that verifies that PDF selected for the job definition fits the image from the camera. Separation data given in the setup phase may be used for identification of the problematic plate, including the varnish plates or screen-printing setup.

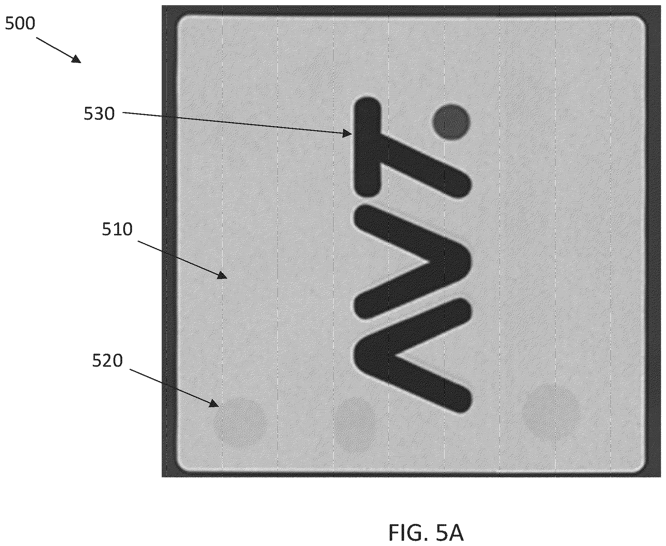

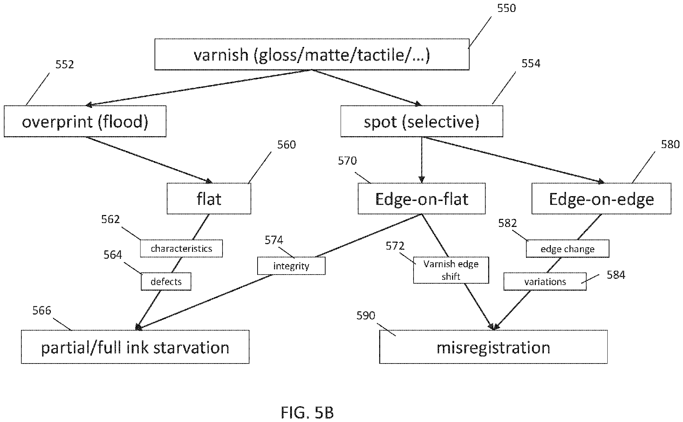

FIG. 5A depicts an exemplary image 500 captured of a printed sample, illustrating the various regions relevant to varnish detection algorithms. The portion of an image 510 having minimal to no printed details, or a solid color, is referred to as a "flat" area. A change in varnish on a flat (e.g. less varnish or more varnish than the rest of the flat) has an "edge-on-flat" transition 520 that is one type of feature that can be detected with the varnish-detection algorithm. Selected varnish placed around a printed detail, such as a printed letter (e.g. the printed AVT logo in Fig. 5A) has an "edge-on-edge" transition 530 between the edge of the printed detail and the edge of the selective varnish area. FIG. 5B depicts a flowchart of the types of characteristics or defects that are detectible using exemplary varnish detection algorithms. As noted in block 550, the relevant types of varnish may include gloss, matte, tactile, or others, without limitation. Each type of varnish may be applied as an overprint (flood) technique 552 or as a spot (selective) technique 554, with flood techniques creating flat areas 560 that may have variations 562 or defects 564 that are indicative of partial or full ink starvation 566. Spot varnish typically creates edge-on-flat 570 and/or edge-on-edge 580 transitions. Shifting 572 of the varnish edge in edge-on-flat areas may indicate misregistration 590, as may edge changes 582 or other variations 584 of edge-on-edge areas. Changes in edge integrity 574 of an edge-on-flat area may indicate partial or full ink starvation 566. Features detected by the algorithm may comprise low-level features (e.g. pixels, edges, moments [as understood by those of skill in the field of AI as quantitative measurements for the shape of a function]) or high-level features (e.g. semantic descriptors, human perceptible image features [e.g. an outline of a facial feature in an image of a person]).

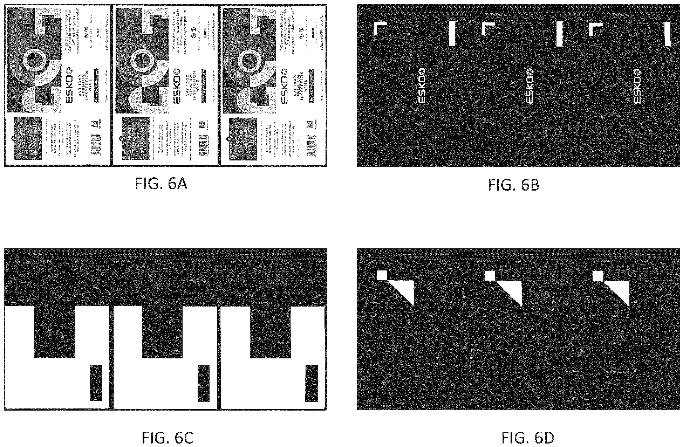

FIGS. 6A-6D depict a first exemplary label that employs varnish techniques. The specific printed details (text, graphics, etc.) as depicted on the label are not relevant to the invention and are therefore not rendered herein in conformance with text size requirements for patent drawings. Likewise, because of drawing requirements, the figures do not show color, but it should be understood that the inspected labels typically also include one or more colors. The print layer is depicted in FIG. 6A, a mapped first (selective) varnish layer is depicted in FIG. 6B, a mapped second (flood matte) varnish layer is depicted in FIG. 6C, and a mapped foil layer is depicted in FIG. 6D.

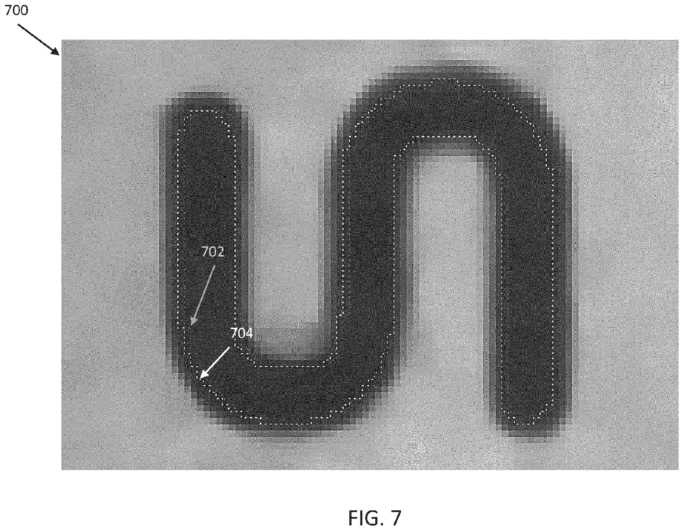

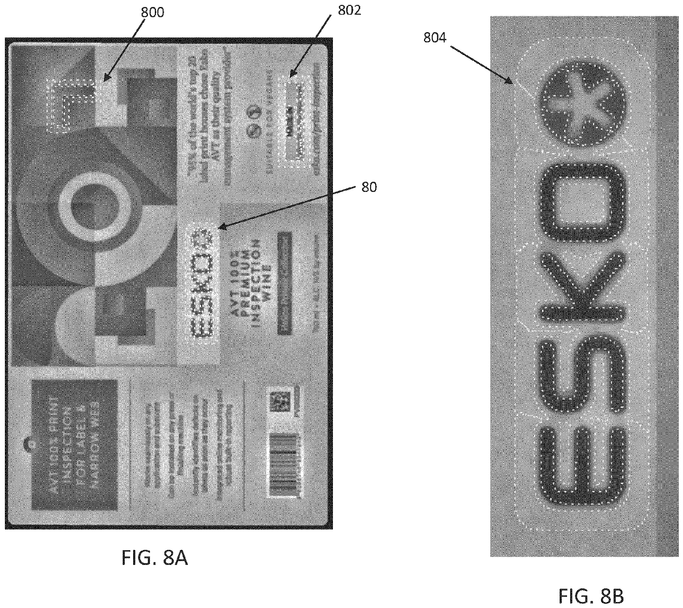

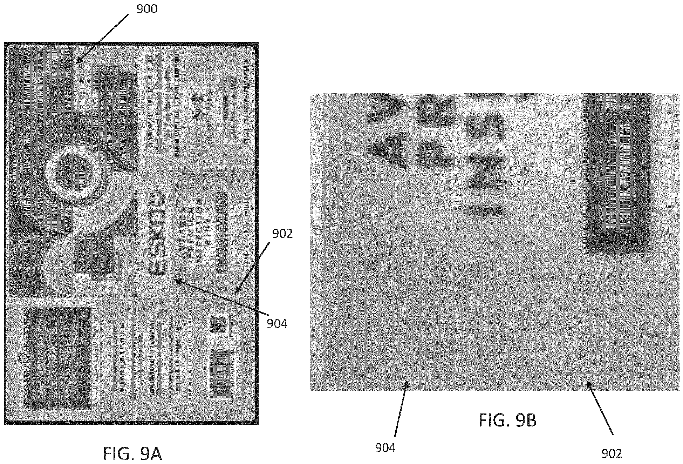

In an exemplary setup sequence, at initiation of the inspection phase, registration of the varnish is fine-tuned for alignment between the varnish/foil/print/mask feature areas from digital layers (PDF) and an actual scan of a user-verified "golden-base," such as is depicted in the magnified image area 700 of FIG. 7, in which fine-tuning adjustments are made so that the varnish boundary is aligned in a desired location represented by dotted line 704. FIGS. 8A and 8B depict areas of selective varnish within the subject label at different levels of magnification, wherein regions outlined by light dotted lines 800, 802, 804 are search areas relevant to the selective varnish layer. FIGS. 9A and 9B depict areas of flood varnish within the subject label at different levels of magnification, wherein regions outlined by light dotted lines (e.g. 900, 902, 904) are search areas relevant to the flood varnish layer. In other embodiments, the initiation of the inspection phase may not use a golden base. In some embodiments, during the setup phase, information is gathered for the initial varnish condition (which is verified as being in conformance with specification, either by human expert review or other measurement techniques), including information such as: gray level statistics, color statistics, color space HSV (hue, saturation, value [brightness]) statistics, histogram, location and geometry (e.g. curvature, continuity, width) of contours and edges of the varnish, texture, and the like. The initial conditions may be uploaded into a rule-based or statistical model, an artificial neural network (ANN), support vector machine (SVM) or the like.

In an inspection stage of the process, each captured image is mapped onto the golden base, fine-tuned varnish blob positions are located on the current inspection mapped image, the current-on-base image is enhanced for better varnish contrast, and information changes are tracked for each varnish search area. In some embodiments, the information changes may be determined using pixel-to-pixel image comparisons or each region (base & current) may be reduced to a feature vector and compared (which is less dependent on 'perfect' alignment than visual methods). In general, the current may be warped onto the base to locate the features as accurately possible in the current image. As the primary interest of the embodiments is to inspect the varnish, the non-varnish-print-visible features are typically mapped onto each other, which safely permits extraction of those features knowing that, e.g., a non-varnish edge-artifact did not bleed into the measurement region in the current image (akin to filling edge-boundaries before freely coloring inside an image). Once the current and base images are aligned, the features of the current image are extracted and compared with those extracted during inspection initialization. Inspection decision making is made quantitatively and temporally (i.e. based upon accumulation/reduction over time (e.g. Kalman Filter)). As varnish malfunctions are typically rigid and tend to be continuous in nature, and given the low-varying deviations of varnish defects (despite hardware / software enhancements), temporal decision making may involve the accumulation and verification of an interval of malfunctioning currents prior to a decision reported to the user. Quantitative decision making typically involves more per-se, current-to-master comparisons that depict a deviation in either pixel-based data or derived feature-vector reduction of both master and current. Quantitative decision making may result from feeding information into a deep-trained contrastive-learning model for emitting a master-current distance measurement. It should be understood that the mapping / warping as described herein is used by the processing for extracting information, but may also be presented to a user as an image to assist the user in visualizing the information captured by the processor. The presentation of information for the benefit of the user may be different than the configured used by the processor.

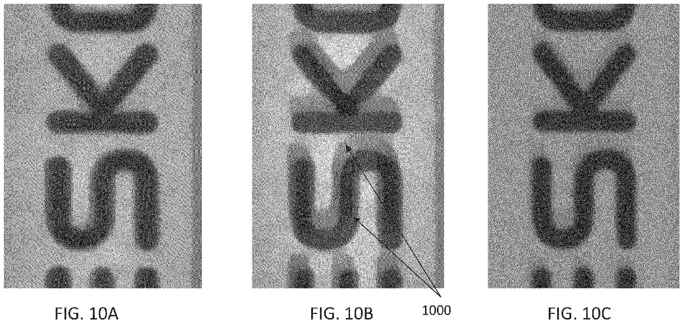

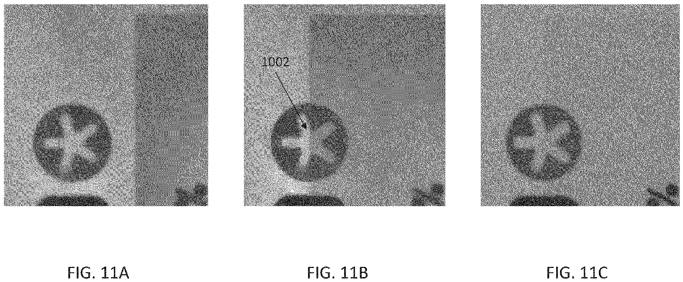

The advantages provided by using image enhancement are apparent from a comparison of FIGS. 10A-10C and 11A-11C, in which each of FIGS. 10A and 11A depict exemplary enhanced images of the base (golden image), and FIGS. 10B and 11B depict exemplary enhanced images of a current inspection image mapped onto the base image, and FIGS. 10C and 11C depict exemplary unenhanced images of the current inspection image (with the subject 5 mm misregistration) mapped onto the base image. Anomalies 1000 and 1002 arising from a 5mm upward shift visible in the respective edge-on-edge search areas and plainly visible in the enhanced FIGS. 10B and 11B, are far less evident (yet still present in the identical locations) in FIGS. 10C and 11C. In each, areas bordered by relatively lighter dotted lines denote search areas with undetected defects and areas bordered by relatively darker dotted lines denote search areas with detected defects.

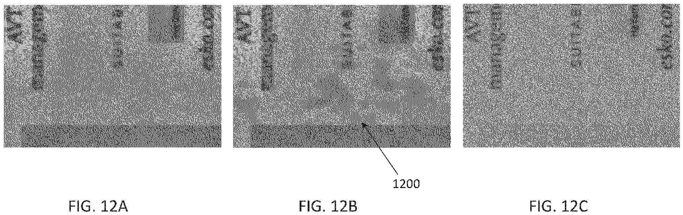

FIGS. 12A-12C depict exemplary enhanced images of the base, exemplary enhanced images of a current inspection image mapped onto the base, and exemplary unenhanced images of the current inspection image mapped onto the base for a portion of the inspected design exhibiting flood matte varnish partial starvation (e.g. area 1200).

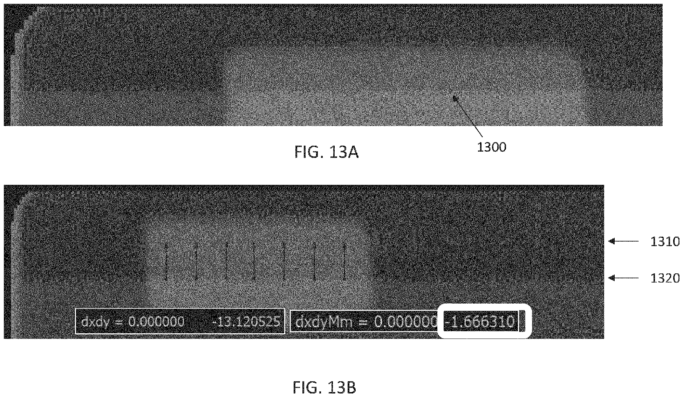

To assist with detection of varnish regions of interest, the algorithm may add edge tracking points onto the (base and inspection) images. For example, in some types of labels prevalent in consumer packaging (such as a beverage label intended to be disposed over a bottle), a water-based matte layer may be disposed selectively over most of the outward face of the label (i.e. to prevent scratches) except where glue will be applied. The matte layer is intentionally starved where one end region is glued over the opposite end region of the label, because the matte layer interferes with glue. Registration and proper starvation are important in this region. FIG. 13A illustrates the exemplary use of tracking points 1300 and comprises a diagnostics visualization depicting the algorithm's selected tracking points superimposed. Each tracking point has freedom of movement between an expected and a detected location. As illustrated in FIG. 13B, use of tracking points may enable automatic calculation of misregistration (e.g. as shown, approximately 1.66 mm down, as detected) as well as easy visualization. It is not necessary to analyze all tracker points that define the starvation edge, and this conceptually illustrates that knowledge of varnish malfunctions (which typically extend across the entire line, not just in one region, for this specific type of potential defect) and other intangibles may be built into the detection model to focus on areas of primary interest. While shown with tracking points for a linear edge starvation detection operation, it should be understood that tracking points may be applied to any type of defect or varnish characteristic detection operation (and that the various light or dark dots of the dotted lines in any of the figures as shown herein may comprise tracking dots).

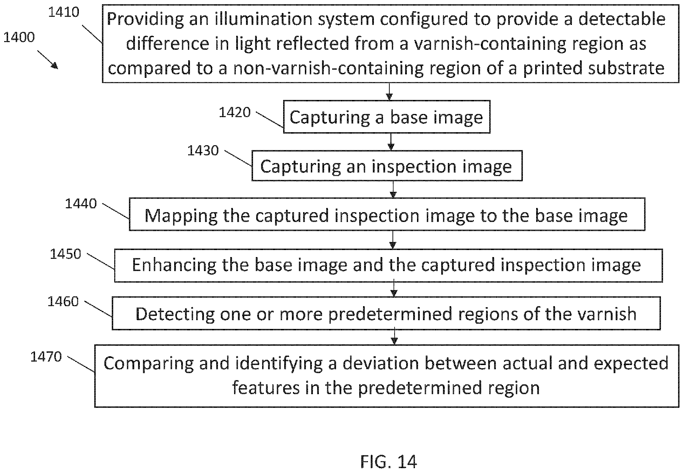

Thus, an exemplary method of performing an aspect of the invention includes the method 1400 as depicted in FIG. 14 and may be at least partially implemented by a computer for inspection of varnish-containing areas of a printed substrate created by a printing operation. The method includes, in step 1410, providing an illumination system configured to provide a detectable difference in light reflected from a varnish-containing region as compared to a non-varnish-containing region of a printed substrate. Embodiments may include an illumination dome comprising an illuminated tubular surface disposed above the printed substrate configured to illuminate the printed substrate with a predetermined amount of light per unit area emanating from the interior surface of the tubular surface and having an observation region for receiving light reflected from the printed substrate. Specifically, the detectable difference is sufficient for a computer processor to detect presence and absence of varnish in a captured image. In step 1420, a base image of the printed substrate is captured with an image capture device connected to a computer memory and a processor. The base image is captured under an initial set of acceptable operating conditions of the printing operation. Next, in step 1230, an inspection image is captured during the printing operation, and in step 1240, the captured inspection image is mapped to the base image. In step 1250, the base image and the captured inspection image mapped to the base image are enhanced with respect to brightness and contrast information relating to the presence or absence of varnish. Step 1260 includes detecting one or more predetermined regions of the varnish in the captured inspection image mapped to the base image; and step 1270 includes comparing an actual feature of the identified one or more predetermined regions to an expected feature of the identified one or more predetermined regions and identifying a deviation between the actual and expected features.

Aspects of the invention include computer readable media embodying (e.g. non-transitory) computer-readable instructions programmed to cause a processor to perform the aforementioned steps and/or to cause controllers of any of the physical systems as described herein to manipulate the physical systems to carry out the method steps using the systems as described herein, or other equivalent of different systems capable of performing the same, similar, or equivalent steps.

### Computer Hardware and Software

Aspects of the invention as described herein may be implemented by a computer processor programmed with application software embodying machine-readable instructions. The instructions, programming, or application(s) may be software or firmware used to implement the device functions associated with the devices (e.g. computers, processors) described throughout this description.

Program aspects of the technology may be thought of as "products" or "articles of manufacture" typically in the form of executable code or process instructions and/or associated data that is stored on or embodied in a type of machine or processor readable medium (e.g., transitory or non-transitory), such as a memory of a computer used to download or otherwise install such programming into the processor or other devices as discussed herein, or a transportable storage device or a communications medium for carrying program for installation in the processor or other devices as discussed herein. Other storage devices or configurations may be added to or substituted for those in the example. Such other storage devices may be implemented using any type of storage medium having computer or processor readable instructions or programming stored therein and may include, for example, any or all of the tangible memory of the computers, processors or the like, or associated modules.

The computers, processors, or other systems described throughout the specification include but are not limited to a processor (e.g. CPU) for performing algorithms as disclosed herein, memory for storing data and programming instructions for supporting the operation of the processor, user input/output (e.g. buttons, switches, display screens, etc.) for receiving instructions from the user and providing feedback to a user, printers or presses (e.g. proofer, inkjet printer, press printer, etc.) for printing the physical print media, and any transceivers (e.g. wired, wireless, Bluetooth, WiFi, etc.) for communication among the devices.

The figures as shown herein depict only certain elements of an exemplary system, and other systems and methods may also be used. Furthermore, even the exemplary systems may comprise additional components not expressly depicted or explained, as will be understood by those of skill in the art. Accordingly, some embodiments may include additional elements not depicted in the figures or discussed herein and/or may omit elements depicted and/or discussed that are not essential for that embodiment. In still other embodiments, elements with similar function may substitute for elements depicted and discussed herein. Features described with respect to one embodiment are not limited to that embodiment, and aspects of the invention may include any and all combinations or permutations of non-mutually-exclusive features as described herein.

Any of the steps or functionality of the system and methods as described herein can be embodied in programming or one more applications. According to some embodiments, "function," "functions," "application," "applications," "instruction," "instructions," or "programming" are program(s) that execute functions defined in the programs. Various programming languages may be employed to create one or more of the applications, structured in a variety of manners, such as object-oriented programming languages (e.g., Objective-C, Java, or C++), procedural programming languages (e.g., C or assembly language), or firmware. In a specific example, a third party application (e.g., an application developed using the ANDROID^{™} or IOS^{™} software development kit (SDK) by an entity other than the vendor of the particular platform) may be mobile software running on a mobile operating system such as IOS^{™}, ANDROID^{™}, WINDOWS^{®} Phone, or another mobile operating systems. In this example, the third party application can invoke API calls provided by the operating system to facilitate functionality described herein.

Hence, a machine-readable medium may take many forms of tangible storage medium. Non-volatile storage media include, for example, optical or magnetic disks, such as any of the storage devices in any computer(s) or the like, such as may be used to implement the client device, media gateway, transcoder, etc. shown in the drawings. Volatile storage media include dynamic memory, such as main memory of such a computer platform. Tangible transmission media include coaxial cables; copper wire and fiber optics, including the wires that comprise a bus within a computer system. Carrier-wave transmission media may take the form of electric or electromagnetic signals, or acoustic or light waves such as those generated during radio frequency (RF) and infrared (IR) data communications. Common forms of computer-readable media therefore include for example: a floppy disk, a flexible disk, hard disk, magnetic tape, any other magnetic medium, a CD-ROM, DVD or DVD-ROM, any other optical medium, punch cards paper tape, any other physical storage medium with patterns of holes, a RAM, a PROM and EPROM, a FLASH-EPROM, any other memory chip or cartridge, a carrier wave transporting data or instructions, cables or links transporting such a carrier wave, or any other medium from which a computer may read programming code and/or data. Many of these forms of computer readable media may be involved in carrying one or more sequences of one or more instructions to a processor for execution.

In addition, in the foregoing Detailed Description, it can be seen that various features are grouped together in various examples for the purpose of streamlining the disclosure. This method of disclosure is not to be interpreted as reflecting an intention that the claimed examples require more features than are expressly recited in each claim. Rather, as the following claims reflect, the subject matter to be protected may lie in fewer than all features of any single disclosed example. Hence, the following claims are hereby incorporated into the Detailed Description, with each claim standing on its own as a separately claimed subject matter.

Although the invention is illustrated and described herein with reference to specific embodiments, the invention is not intended to be limited to the details shown. Rather, various modifications may be made in the details within the scope and range of equivalents of the claims and without departing from the invention.

## Claims

**1.** An illumination system for inspection of varnish-containing areas of a printed substrate created by a printing operation, the system comprising:
an illumination dome comprising an illuminated tubular surface disposed above the printed substrate, the illuminated tubular surface configured to illuminate the printed substrate with a predetermined amount of light per unit area emanating from the interior surface of the tubular surface, the illumination dome having an observation region for receiving light reflected from the printed substrate; and
an illumination-starved region of the illumination dome configured to direct a lesser amount of light per unit area than the predetermined amount of light per unit area toward the printed substrate , the illumination starved region configured to provide a predetermined detectable degree of difference in light reflected from a varnish-containing region as compared to a non-varnish-containing region of the printed substrate .

**2.** The illumination system of claim 1, wherein the illumination dome comprises a reflective interior surface and the illumination system further comprises a light source configured to emit light into the illumination dome, wherein reflection of the emitted light from the inner surface of the dome comprises the predetermined amount of light per unit area, and the illumination-starved region of the illumination dome comprises a less reflective area configured to reflect the lesser amount of light per unit area.

**3.** The system of claim 2, wherein the illumination-starved region is embodied by an illumination controller variable between at least a first condition configured to direct the lesser amount of light per unit area and a second condition configured to direct the predetermined amount of light.

**4.** The system of claim 3, wherein the illumination-controller is moveable between the at least first condition and the second condition.

**5.** The system of any one of claim 2-4, wherein the illumination controller comprises one of:
a set of fixed interchangeable sheets, in which disposition of a first sheet in a relevant location of the dome embodies the first condition, and disposition of a second sheet in the relevant location of the dome embodies the second condition;
a shutter moveable between a first position disposed in a pocket in which the shutter does not receive light and a second position in which the shutter does receive light; and
a polygonal cylindrical baffle rotatable between at least a first orientation embodying the first condition and a second orientation embodying the second condition.

**6.** The system of any one of claims 2-5, wherein the illumination-controller is variable between the first condition configured to direct a first lesser amount of light per unit area, the second condition configured to direct the predetermined amount of light, and a third condition configured to direct a second lesser amount of light per unit area intermediate the first and second amounts of light per unit area.

**7.** The system of claim 6, wherein the illumination controller comprises the polygonal cylindrical baffle, wherein the polygonal cylindrical baffle has at least a first facet configured to implement the second condition with the first facet facing the printed substrate, at least second and third adjacent specularly reflective facets having an edge therebetween configured to implement the first condition with the edge facing the printed substrate and the adjacent specularly reflective facets directing reflected light reflected from the printed substrate to respective light traps, and at least a third facet configured to implement the third condition with the third facet facing the printed substrate.

**8.** An inspection system for inspection of varnish-containing areas of a printed substrate created by a printing operation, the inspection system comprising:
an illumination system of any one of claims 1-7;
an image capture device connected to a computer memory and a processor for capturing and processing a captured image of the printed substrate; and
non-transitory, computer-readable instructions embodied in the computer memory and programmed to cause the processor to perform the steps of:
a) capturing a base image under an initial set of acceptable operating conditions of the printing operation;
b) capturing an inspection image during the printing operation;
c) mapping the captured inspection image to the base image;
d) enhancing the base image and the captured inspection image mapped to the base image to enhance brightness and contrast information relating to the presence or absence of varnish;
e) detecting one or more predetermined regions of the varnish in the captured inspection image mapped to the base image;
f) comparing an actual feature of the identified one or more predetermined regions to an expected feature of the identified one or more predetermined regions and identifying a deviation between the actual and expected features.

**9.** The system of claim 8, wherein the feature comprises an edge-on-edge or an edge-on-flat feature.

**10.** The system of claim 8 or 9, wherein the deviation comprises a shift in location of the feature.

**11.** The system of any one of claims 8-10, further comprising identifying a deviation greater than a threshold amount as a defect.

**12.** The system of any one of claims 8-11, wherein the instructions further include instructions for providing one or more tracking dots to be applied to a varnish edge region in the inspection image, the base image, the inspection image superimposed on the base image, or a combination thereof, and wherein the comparing step comprises comparing an actual location of the one or more tracking dots in the inspection image to an expected location and determining a difference between the expected and actual locations.

**13.** The system of any one of claims 9-12, wherein the illumination-starved region is variable between the implemented condition and the non-implemented condition, and the system is further configured to detect ink-related deviations in the captured image when the illumination starved area is in the implemented condition.

**14.** A computer-implemented method for inspection of varnish-containing areas of a printed substrate created by a printing operation, the method comprising:
providing an illumination system comprising an illumination dome comprising an illuminated tubular surface disposed above the printed substrate, the illuminated tubular surface configured to illuminate the printed substrate with a predetermined amount of light per unit area emanating from the interior surface of the tubular surface, the illumination dome having an observation region for receiving light reflected from the printed substrate;
capturing a captured image of the printed substrate with an image capture device connected to a computer memory and a processor;
providing a detectable difference in light reflected from a varnish-containing region as compared to a non-varnish-containing region of the printed substrate sufficient for the processor to detect presence and absence of varnish in the captured image;
using the processor to perform the steps of:
a) capturing a base image under an initial set of acceptable operating conditions of the printing operation;
b) capturing an inspection image during the printing operation;
c) mapping the captured inspection image to the base image;
d) enhancing the base image and the captured inspection image mapped to the base image to enhance brightness and contrast information relating to the presence or absence of varnish;
e) detecting one or more predetermined regions of the varnish in the captured inspection image mapped to the base image; and
f) comparing an actual feature of the identified one or more predetermined regions to an expected feature of the identified one or more predetermined regions and identifying a deviation between the actual and expected features.

**15.** Computer readable media embodying non-transitory, computer-readable instructions programmed to cause a processor to perform the steps of:
a) causing an image capture device to capture a base image of a varnish-containing areas of a printed substrate created by a printing operation under an initial set of acceptable operating conditions of the printing operation;
b) capturing an inspection image during the printing operation;
c) mapping the captured inspection image to the base image;
d) enhancing the base image and the captured inspection image mapped to the base image to enhance brightness and contrast information relating to the presence or absence of varnish;
e) detecting one or more predetermined regions of the varnish in the captured inspection image mapped to the base image;
f) comparing an actual feature of the identified one or more predetermined regions to an expected feature of the identified one or more predetermined regions and identifying a deviation between the actual and expected features.

**15.** The computer readable media of claim 14, wherein the processor is configured to be connected to an inspection system comprising an illumination system comprising an illumination dome comprising an illuminated tubular surface disposed above the printed substrate, the illuminated tubular surface configured to illuminate the printed substrate with a predetermined amount of light per unit area emanating from the interior surface of the tubular surface, the illumination dome having an observation region for receiving light reflected from the printed substrate; and
an illumination-starved region of the illumination dome configured to direct a lesser amount of light per unit area than the predetermined amount of light per unit area toward the printed substrate, the illumination starved region configured to provide a predetermined detectable degree of difference in light reflected from a varnish-containing region as compared to a non-varnish-containing region of the printed substrate, wherein the illumination-starved region is controlled by an illumination controller variable between at least a first condition configured to direct the lesser amount of light per unit area and a second condition configured to direct the predetermined amount of light, and
the instructions further comprise instructions for causing the illumination controller to be manipulated between the at least first and second conditions.
